# EUROPÄISCHE PATENTANMELDUNG

(11) **EP 4 368 785 A1**
(43) Veröffentlichungstag der Anmeldung: **15.05.2024**
(21) Anmeldenummer: 23208250.3
(22) Anmeldetag: 07.11.2023
(51) Int. Cl.: E03C 1/04, E03C 1/05, F16K 11/00

(54) **EINHEBEL-KARTUSCHE ZUR SIGNALGENERIERUNG**

(30) Priorität: 08.11.2022 DE 102022129445
(71) Anmelder: Aquis Systems AG, 9445 Rebstein (CH)
(72) Erfinder: Gröning, Ingolf, 97980 Bad Mergentheim (DE)
(74) Vertreter: Zimmermann & Partner Patentanwälte mbB

(57) **Zusammenfassung**

Die Erfindung betrifft eine Kartusche (1) zur Generierung von Steuersignalen für ein Wasserausgabesystem, umfassend ein Gehäuse (5), eine relativ zu dem Gehäuse (5) bewegliche Hebelbefestigung (2) zur Aufnahme eines Hebels, und einen optischen Sensor (7) zur optischen Überwachung eines Außenbereichs (10) außerhalb der Kartusche (1).

## Beschreibung

### Technisches Gebiet

Die Erfindung betrifft eine Kartusche, einen Einhebelmischer, ein Wassersystem und ein Verfahren zum Steuern eines Wassersystems.

### Stand der Technik

Aus dem Stand der Technik sind hydraulische Einhebelmischer bekannt, die über eine begrenzte Rotationsbewegung das relative Verhältnis des warmen Wassers zu dem kalten Wasser vorgeben und über eine begrenzte Hebelbewegung die Durchflussmenge des Wassers vorgeben, wobei beide Funktionen in dem namensgebenden einen Hebel des Einhebelmischers so miteinander vereint sind, dass diese gleichzeitig bedient werden können. Die Bedienung hydraulischer Einhebelmischer verschiedener Hersteller ist in weiten Bereichen identisch, so dass ein hoher Gewöhnungsgrad an die Bedienbarkeit bei den Personen, die die hydraulischen Einhebelmischer bedienen, vorhanden ist.

Aus der EP 3 690 292 B1 sind intelligente Einhebelmischer bekannt, die zusätzlich die Temperatur des Wassers nach der Mischung erfassen und elektronisch an eine Steuerung weitergeben.

Allerdings weisen Einhebelmischer aus dem Stand der Technik einen geringen Funktionsumfang auf oder können Nachteile in Bezug auf Hygiene oder Sicherheit aufweisen. Weiter ist bei bekannten Einhebelmischern das zu mischende Wasser zwingend durch den Einhebelmischer bzw. dessen Gehäuse zu führen. Eine größere Flexibilität bezüglich des Funktionsumfangs, der Anordnung des Hebels oder der wasserführenden Elemente kann wünschenswert sein.

### Offenbarung der Erfindung

Aufgabe der Erfindung ist es, die Probleme aus dem Stand der Technik, zumindest teilweise, zu lösen. Insbesondere ist es Aufgabe der Erfindung, eine Vorrichtung anzugeben, welche bei einem Einhebelmischer einen größeren Funktionsumfang, eine größere Flexibilität zur Anordnung der wasserführenden Leitungen, eine verbesserte Hygiene oder eine erhöhte Sicherheit bietet.

Die Aufgabe wird mit einer Kartusche nach dem Anspruch 1 sowie einem Einhebelmischer, einem Wassersystem und einem Verfahren nach den nebengeordneten Ansprüchen gelöst. Vorteilhafte Weiterbildungen und Ausführungsformen ergeben sich aus den Unteransprüchen und aus dieser Beschreibung.

Ein Aspekt der vorliegenden Offenbarung betrifft eine Kartusche, insbesondere eine Einhebelkartusche, zur Generierung von Steuersignalen für ein Wasserausgabesystem, umfassend ein Gehäuse, eine relativ zu dem Gehäuse bewegliche Hebelbefestigung zur Aufnahme eines Hebels, und einen optischen Sensor zur optischen Überwachung eines Außenbereichs außerhalb der Kartusche.

Ein weiterer Aspekt der vorliegenden Offenbarung betrifft einen Einhebelmischer für ein Wasserabgabesystem, umfassend eine Armatur mit einem Armaturgehäuse, und eine Kartusche gemäß einer hierin beschriebenen Ausführungsform, wobei die Kartusche zur Anordnung in dem Armaturgehäuse eingerichtet ist.

Noch ein weiterer Aspekt der vorliegenden Offenbarung betrifft ein Wassersystem zur Abgabe von Wasser, insbesondere ein konditionierbares Wassersystem. Typischerweise umfasst das Wassersystem eine Kartusche oder einen Einhebelmischer nach einer hierin beschriebenen Ausführungsform. Typischerweise umfasst das Wassersystem mindestens ein Stellglied zum Steuern der Bereitstellung von Wasser und eine Steuerungseinrichtung zum Kontrollieren des mindestens einen Stellglieds.

Ein weiterer Aspekt der vorliegenden Offenbarung betrifft ein Verfahren zum Steuern eines Wassersystems nach einer hierin beschriebenen Ausführungsform. Das Verfahren umfasst ein Erfassen einer Geste in dem Außenbereich der Kartusche unter Verwendung des optischen Sensors der Kartusche und ein Erzeugen eines der Geste entsprechenden Steuersignals. Das Verfahren umfasst ein Übermitteln des Steuersignals an die Steuerungseinrichtung. Das Verfahren umfasst weiter ein Ansteuern des mindestens einen Stellglieds durch die Steuerungseinrichtung in Abhängigkeit von dem Steuersignal.

Gemäß typischen Ausführungsformen ist eine Kartusche zur Verwendung in einem Wassersystem vorgesehen, insbesondere in einem zur Ausgabe von Wasser eingerichteten Wasserausgabesystem. Das Wasserausgabesystem kann beispielsweise eine Armatur, einen Wasserhahn oder ein Schanksystem umfassen. Typischerweise ist die Kartusche eingerichtet, in ein Armaturgehäuse einer Armatur des Wasserausgabesystems angeordnet zu werden. Das Wasserausgabesystem kann in einigen Ausführungsformen als ein Wassermischsystem ausgebildet sein, insbesondere zum Mischen von Warm- und Kaltwasser. In weiteren Ausführungsformen kann das Wasserausgabesystem zur Ausgabe von ungemischtem Wasser eingerichtet sein.

Bei typischen Ausführungsformen weist die Kartusche ein Gehäuse und eine relativ zu dem Gehäuse bewegliche Hebelbefestigung zur Aufnahme eines Hebels auf, insbesondere zur Aufnahme genau eines Hebels oder eines Einhebels. Insbesondere kann die Kartusche als Einhebelkartusche ausgebildet sein. Typischerweise weist die Kartusche eine Kartuschenachse auf, wobei die Hebelbefestigung an einem bezüglich der Kartuschenachse axialen Ende der Kartusche vorgesehen ist. Die Begriffe "axial", "radial" und "in Umfangsrichtung" beziehen sich hierin typischerweise auf die Kartuschenachse. Typischerweise entspricht die Kartuschenachse der Längsachse der Kartusche. Typischerweise ist die Kartusche dazu eingerichtet, in Richtung der Kartuschenachse in ein Armaturgehäuse eingeführt zu werden. Das Gehäuse der Kartusche kann beispielsweise zumindest im Wesentlichen zylindrisch ausgebildet sein, wobei die Zylinderachse der Kartuschenachse entspricht. Bei weiteren Ausführungsformen kann das Gehäuse eine nicht-zylindrische Form aufweisen, beispielsweise zumindest im Wesentlichen quaderförmig ausgebildet sein.

Typischerweise umfasst die Hebelbefestigung einen Befestigungsarm, an welchem der Hebel befestigbar ist. Insbesondere ist der Hebel an einem Ende des Befestigungsarms befestigbar. Der Befestigungsarm ist typischerweise um die Kartuschenachse der Kartusche drehbar in dem Gehäuse der Kartusche gelagert, beispielsweise durch einen Lagerring. Typischerweise ist der Befestigungsarm um eine Kippachse bezüglich des Gehäuses der Kartusche kippbar gelagert. Die Kippachse ist typischerweise zumindest im Wesentlichen senkrecht zu der Kartuschenachse der Kartusche ausgerichtet. Beispielsweise kann der Befestigungsarm über ein Kipplager kippbar in einem Lagerring der Kartusche gelagert sein, wobei der Lagerring drehbar um die Kartuschenachse in dem Gehäuse der Kartusche gelagert ist.

Bei Ausführungsformen kann der Hebel an der Hebelbefestigung befestigt werden. Mit dem Begriff Hebel wird typischerweise der Hebel bezeichnet, welcher aus einer Armatur hervorsteht, welche die Kartusche aufnimmt. Die Armatur kann die Form einer herkömmlichen Armatur haben und wasserführend sein. Bei weiteren Ausführungsformen ist die Kartusche in einer nicht-wasserführenden Armatur verbaut, beispielsweise in einer Armatur zur Bedienung einer Dusche, welche unter Putz bzw. unter Fliesen anderweitig mit Wasser versorgt wird. Typischerweise wird der Hebel starr mit dem Befestigungsarm der Hebelbefestigung verbunden.

Gemäß typischen Ausführungsformen umfasst die Kartusche einen optischen Sensor. Typischerweise ist der optische Sensor zur optischen Überwachung eines Außenbereichs außerhalb der Kartusche eingerichtet. Beispielsweise kann der optische Sensor einen Infrarot-Sensor oder einen Time-of-Flight-Sensor umfassen oder als Infrarot-Sensor oder Time-of-Flight-Sensor ausgebildet sein. Typischerweise umfasst der optische Sensor eine Lichtquelle zum Aussenden von Licht in den Außenbereich. Die Lichtquelle kann insbesondere zum Aussenden von sichtbarem oder infrarotem Licht eingerichtet sein. Die Lichtquelle kann beispielsweise eine Infrarot-Lichtquelle sein. Bei typischen Ausführungsformen umfasst der optische Sensor einen Lichtempfänger zum Empfangen von Licht aus dem Außenbereich außerhalb der Kartusche. Typischerweise ist der optische Sensor dazu eingerichtet ist, ein Sensorsignal auf Grundlage des von dem Lichtempfänger empfangenen Lichts zu erzeugen, insbesondere auf Grundlage des ausgesendeten Lichts und auf Grundlage des empfangenen Lichts.

Bei typischen Ausführungsformen ist der optische Sensor dazu eingerichtet, eine Geste in dem Außenbereich zu erfassen, insbesondere in dem von dem optischen Sensor überwachten Bereich des Außenbereichs. Eine Geste kann eine Bewegung umfassen, insbesondere eine Handbewegung. Typischerweise ist der optische Sensor dazu eingerichtet, die Geste basierend auf einem in dem optischen Sensor erzeugten Sensorsignal zu erfassen. Bei Ausführungsformen ist der optische Sensor dazu eingerichtet, einen Abstand der Geste zu dem optischen Sensor zu erfassen. Der Abstand kann beispielsweise mittels eines Infrarot-Sensors oder basierend auf einer Licht-Laufzeit unter Verwendung eines Time-of-Flight-Sensors bestimmt werden.

Typischerweise ist der optische Sensor, insbesondere eine Signalverarbeitungseinrichtung des optischen Sensors, dazu eingerichtet, basierend auf der erfassten Geste ein Steuersignal für das Wasserausgabesystem auszugeben. Das Steuersignal kann insbesondere basierend auf der erfassten Geste und dem Abstand der Geste von dem optischen Sensor erzeugt werden. Beispielsweise kann das Steuersignal erzeugt werden, wenn die Geste in einem vorbestimmten Abstandsbereich von dem optischen Sensor erfasst wird. Das Steuersignal kann bei Erfassen der Geste ausgegeben werden, insbesondere unmittelbar bei Erfassen der Geste. Bei Ausführungsformen kann das Steuersignal weitere Informationen umfassen, beispielweise eine Laufzeit des Lichts oder einen Abstand der Geste zu dem optischen Sensor, oder Identifikationsinformationen zum Identifizieren des optischen Sensors, welcher die Geste erfasst hat.

Bei typischen Ausführungsformen weist das Gehäuse der Kartusche zwischen dem optischen Sensor und dem Außenbereich eine Sensoröffnung auf. Der optische Sensor ist typischerweise derart angeordnet oder ausgerichtet, dass der optische Sensor Licht aus dem Außenbereich durch die Sensoröffnung empfangen kann oder Licht durch die Sensoröffnung in den Außenbereich aussenden kann. Typischerweise ist eine Sensoröffnung als Aussparung, Loch oder Ausnehmung in dem Gehäuse der Kartusche ausgebildet. Typischerweise ist die Sensoröffnung in einer Linie mit der Ausrichtung des optischen Sensors bereitgestellt, insbesondere um eine Funktion des optischen Sensors zum Erfassen von Gesten in dem Außenbereich nicht zu behindern. Die Sensoröffnung des Gehäuses kann durch ein lichtdurchlässiges Fenster oder einen Kollimator abgedeckt sein. Ein Kollimator kann beispielsweise Licht zu oder von dem optischen Sensor lenken, so dass insbesondere ein durch den Kollimator definierter Bereich des Außenbereichs von dem optischen Sensor überwacht wird.

Bei typischen Ausführungsformen ist der optische Sensor mit dem Gehäuse der Kartusche verbunden, insbesondere starr verbunden. Alternativ oder zusätzlich kann der optische Sensor oder ein weiterer optischer Sensor mit der Hebelbefestigung verbunden sein, insbesondere starr verbunden sein. Die Hebelbefestigung kann eine Sensoröffnung zwischen dem optischen Sensor und dem Außenbereich aufweisen. Beispielsweise kann die Hebelbefestigung zumindest teilweise hohl oder durchgängig hohl ausgebildet sein. Die Hebelbefestigung kann beispielsweise an dem zur Befestigung des Hebels vorgesehenen axialen Ende der Hebelbefestigung eine Sensoröffnung aufweisen. Der optische Sensor kann in der Hebelbefestigung angeordnet sein. In weiteren Ausführungsformen kann der optische Sensor starr mit dem Gehäuse verbunden sein und einen Außenbereich durch die Hebelbefestigung hindurch überwachen. Beispielsweise kann eine hohl ausgebildete Hebelbefestigung an dem inneren Ende einen Kollimator oder eine Linse aufweisen, wodurch Licht zu oder von dem optischen Sensor durch die hohle Hebelbefestigung und durch die Sensoröffnung der Hebelbefestigung geführt wird. Ausführungsformen mit einer Sensoröffnung in der Hebelbefestigung und einem in Richtung des Hebels ausgerichteten, optischen Sensor können insbesondere eine sensorische Betätigungsmöglichkeit in einem Zentralbereich des Hebels bereitstellen.

Bei Ausführungsformen weist die Kartusche mehr als einen optischen Sensor auf, insbesondere eine Mehrzahl an optischen Sensoren, welche geeignet sind zur optischen Überwachung des Außenbereichs. Die Kartusche kann beispielsweise mindestens zwei, mindestens drei oder mindestens vier optische Sensoren aufweisen. Typischerweise weist das Gehäuse der Kartusche jeweils eine Sensoröffnung zwischen den optischen Sensoren und dem Außenbereich auf. Beispielsweise kann eine Mehrzahl an optischen Sensoren in Umfangsrichtung verteilt um die Kartuschenachse angeordnet sein. In weiteren Ausführungsformen kann mindestens ein optischer Sensor starr mit dem Gehäuse verbunden und mindestens ein weiterer optischer Sensor starr mit der Hebelbefestigung verbunden sein. Bei typischen Ausführungsformen sind die optischen Sensoren der Mehrzahl von optischen Sensoren, insbesondere einer Mehrzahl von zumindest im Wesentlichen radial ausgerichteten oder in Umfangsrichtung verteilt angeordneten optischen Sensoren, jeweils mit unterschiedlichen Funktionen belegt.

Bei typischen Ausführungsformen sind ein oder mehrere optische Sensoren einzeln aktivierbar oder deaktivierbar, insbesondere über eine Software oder durch Programmierung einer Steuerungseinrichtung eines Wassersystems oder einer Signalverarbeitungseinrichtung der optischen Sensoren. Beispielsweise können ein oder mehrere optische Sensoren je nach Einbaustellung der Kartusche in einer Armatur deaktiviert werden, insbesondere wenn die ein oder mehreren optischen Sensoren nicht in Richtung eines Fensters der Armatur gerichtet sind. Bei weiteren Ausführungsformen können ein oder mehrere optische Sensoren in Abhängigkeit weiterer Signale weiterer Bedienelemente eines Wassersystems aktiviert oder deaktiviert werden.

Gemäß typischen Ausführungsformen ist der optische Sensor zur Überwachung eines in axialer Richtung an die Kartusche angrenzenden Bereichs des Außenbereichs ausgerichtet. Bei Ausführungsformen ist der optische Sensor insbesondere zumindest im Wesentlichen in eine axiale Richtung ausgerichtet. Der optische Sensor kann zur Überwachung eines axial an die Hebelbefestigung angrenzenden Bereichs des Außenbereichs eingerichtet sein. Der optische Sensor kann beispielsweise an oder in der Hebelbefestigung vorgesehen sein. Alternativ kann Licht zwischen dem Außenbereich und dem optischen Sensor durch eine in der Hebelbefestigung angeordnete Linse oder einen in der Hebelbefestigung angeordneten Kollimator zu oder von dem optischen Sensor gelenkt werden. Ausführungsformen können beispielsweise zur Erfassung von Gesten eingerichtet sein, welche axial versetzt zum Hebel ausgeführt werden.

Alternativ oder zusätzlich kann der optische Sensor zur Überwachung eines Bereichs des Außenbereichs eingerichtet sein, welcher an das der Hebelbefestigung abgewandte, axiale Ende der Kartusche angrenzt. Insbesondere bei einer horizontal einzubauenden Kartusche kann der optische Sensor zur Erfassung von Gesten auf der der Hebelbefestigung oder dem Hebel gegenüberliegenden Seite der Kartusche eingerichtet sein.

Bei typischen Ausführungsformen ist der optische Sensor zur Überwachung eines Bereichs radial außerhalb der Kartusche ausgerichtet. Der von dem optischen Sensor überwachte Bereich kann insbesondere zumindest einen Teil des axialen Bereichs der Kartusche umfassen. Insbesondere kann der optische Sensor zumindest im Wesentlichen radial ausgerichtet sein. Beispielsweise kann der optische Sensor zur Erfassung von Gesten radial außerhalb der Kartusche oder der Armatur eingerichtet sein.

Gemäß typischen Ausführungsformen umfasst die Kartusche eine Gebereinrichtung, insbesondere eine elektronische Gebereinrichtung. Typischerweise ist die Gebereinrichtung zur Erzeugung eines Signals, insbesondere eines elektronischen oder drahtlosen Signals, in Abhängigkeit der Position der Hebelbefestigung eingerichtet. Bei typischen Ausführungsformen wird die Position relativ zu einem Koordinatensystem der Kartusche ausgegeben. Typischerweise gibt das Signal eine Position der Hebelbefestigung relativ zu dem Gehäuse wieder. Typischerweise ist die Hebelbefestigung und insbesondere ein an der Hebelbefestigung befestigter Hebel um zwei Achsen beweglich, insbesondere begrenzt um mindestens zwei Achsen beweglich. Beispielsweise ist die Hebelbefestigung um genau zwei Achsen beweglich oder drehbar. Typischerweise ist die Hebelbefestigung oder der Hebel um die Kartuschenachse drehbar und um die Kippachse kippbar.

Bei typischen Ausführungsformen umfasst die Gebereinrichtung einen Positionsgeber und einen Wertgeber. Typischerweise wird der Wertgeber dazu verwendet oder ist dazu eingerichtet, ein Signal zu erzeugen. Das Signal kann anzeigen, in welcher Position sich der Positionsgeber relativ zu dem Wertgeber befindet. Der Wertgeber kann als elektronischer Wertgeber ausgebildet sein. Insbesondere kann der Wertgeber einen Hallsensor umfassen. Der Positionsgeber kann beispielsweise einen Permanentmagneten umfassen. Typischerweise ist der Positionsgeber starr mit der Hebelbefestigung verbunden. Typischerweise ist der Wertgeber starr mit dem Gehäuse der Kartusche verbunden. Auf diese Weise ist eine verschleißfreie Signalerzeugung ohne Schleifkontakte oder andere mechanische Kontakte wie beispielsweise Schalter möglich. Bei Ausführungsformen werden der Drehwinkel und der Kippwinkel des Gebermagneten, beispielsweise alpha, phi mittels des Hallsensors in einem kartesischen Koordinatensystem x, y, z aufgenommen. Soweit hierin "der Hallsensor" bezeichnet wird, ist damit typischerweise ein mehrachsiger Hallsensor oder eine Anordnung mehrerer Einzel-Hallsensoren gemeint, beispielsweise von drei linearen Hallsensoren. Eine Transformation von dem x, y, z System in das alpha, phi System kann bei Ausführungsformen in dem Wertgeber oder in einer anderen Einrichtung im Datenstrom abwärts des Wertgebers, beispielsweise in einer Signalverarbeitungseinrichtung der Gebereinrichtung, im Kommunikationsmodul oder in der Steuerungseinrichtung vorgenommen werden. Bei weiteren typischen Ausführungsformen kann der Gebereinrichtung einen oder mehrere Potentiometer mit einem als Schleifkontakt ausgebildeten Positionsgeber zum Bestimmen der Position der Hebelbefestigung umfassen.

Bei typischen Ausführungsformen umfassen der optische Sensor und die Gebereinrichtung jeweils eine Signalverarbeitungseinrichtung zum Erzeugen von Steuersignalen für das Wasserausgabesystem. Typischerweise ist die mindestens eine Signalverarbeitungseinrichtung in dem Gehäuse der Kartusche angeordnet. Von Signalverarbeitungseinrichtungen ausgegebene Steuersignale können beispielsweise eine Position der Hebelbefestigung angeben oder das Erfassen einer Geste durch den optischen Sensor anzeigen. Typischerweise sind die Signalverarbeitungseinrichtungen der Gebereinrichtung und des optischen Sensors auf einer Platine angeordnet, insbesondere auf derselben Platine. Typischerweise ist die Platine in dem Gehäuse der Kartusche angeordnet.

Typische Kartuschen umfassen ein Kommunikationsmodul, welches beispielsweise mit dem optischen Sensor oder der Gebereinrichtung über eine Kabelverbindung oder drahtlos verbunden ist. Typischerweise ist das Kommunikationsmodul zur Übertragung von Steuersignalen an eine Steuerungseinrichtung eines Wasserausgabesystems eingerichtet. Typische Kartuschen umfassen eine Energieversorgungseinrichtung. Die Energieversorgungseinrichtung kann beispielsweise einen Netzanschluss, eine Batterieaufnahme, einen Energiespeicher oder ein Energie-Harvesting-Modul aufweisen, welches beispielsweise aus einem Temperaturunterschied zum Heißwasser Energie bezieht. Wie bei "oder"-Aufzählungen üblich, können auch mehrere oder alle der genannten Alternativen vorgesehen sein, so weit nicht explizit ausgeschlossen. Energiespeicher, Energie-Harvesting-Modul oder Netzanschluss mit bspw. Schaltnetzteil können auf einer Platine zusammen mit einer Signalverarbeitungseinrichtung des optischen Sensors oder der Gebereinrichtung, oder zusammen mit einem optischen Sensor angeordnet sein, beispielsweise um eine kompakte Bauweise zu erreichen.

Typische Ausführungsformen betreffen einen Einhebelmischer für ein Wasserabgabesystem. Typischerweise umfasst der Einhebelmischer eine Armatur mit einem Armaturgehäuse. Typischerweise umfasst der Einhebelmischer eine Kartusche gemäß hierin beschriebenen Ausführungsformen, wobei die Kartusche zur Anordnung in dem Armaturgehäuse eingerichtet ist oder in dem Armaturgehäuse angeordnet ist. Der Einhebelmischer kann einen Hebel umfassen, welcher zur Befestigung an der Hebelbefestigung der Kartusche eingerichtet ist. Das Armaturgehäuse kann eine Armaturenöffnung für den optischen Sensor der Kartusche aufweisen. Die Armaturenöffnung kann derart angeordnet sein, dass der optische Sensor durch die Sensoröffnung des Gehäuses der Kartusche und durch die Armaturenöffnung einen Außenbereich außerhalb des Armaturgehäuses überwachen kann. Die Armaturenöffnung kann durch ein lichtdurchlässiges Fenster oder einen Kollimator abgedeckt sein. Bei Ausführungsformen kann das Armaturgehäuse eine Sensoröffnung der Kartusche teilweise überdecken, insbesondere um eine Sensorfunktion nur in einer von der Armaturenöffnung vorgegebenen Richtung zu erlauben. Bei Ausführungsformen ist das Armaturgehäuse zur Aufnahme einer horizontal ausgerichteten Kartusche eingerichtet. Insbesondere kann ein Hebel seitlich an der Kartusche angeordnet werden. Bei weiteren typischen Ausführungsformen kann die Kartusche in vertikaler Richtung in eine Armatur eingebaut werden. Der Hebel kann auf der Kartusche angeordnet werden.

Erfindungsgemäße Wassersysteme, welche zur Abgabe von Wasser eingerichtet sind, insbesondere zur Abgabe von konditioniertem Wasser, umfassen eine Kartusche oder einen Einhebelmischer gemäß hierin beschriebenen Ausführungsformen, mindestens ein Stellglied zum Steuern der Bereitstellung von Wasser und eine Steuerungseinrichtung zum Kontrollieren des Stellglieds. Das mindestens eine Stellglied umfasst typischerweise mindestens ein Ventil zum Steuern eines Durchflusses von Wasser. Typischerweise ist ein Kommunikationsmodul der Kartusche dazu eingerichtet, ein von dem optischen Sensor oder der Gebereinrichtung empfangenes Steuersignal an die Steuerungseinrichtung des Wassersystems zu übermitteln. Die Übermittlung kann drahtlos, beispielsweise über Bluetooth oder WLAN, kabelgebunden, oder optisch erfolgen.

Bei typischen Wassersystemen kann die Steuerungseinrichtung integral mit der Kartusche ausgeführt sein, beispielsweise auch integral mit einer Signalverarbeitungseinrichtung der Kartusche oder dem Kommunikationsmodul. Dies bietet den Vorteil eines kompakten Aufbaus der Gesamtanlage. Von der Steuerungseinrichtung der Kartusche müssen dann nur die Steuerdaten oder Befehle an die Stellglieder übertragen werden, wobei optional weitere Verbindungen beispielsweise zu einem Server oder einer Cloud vorgesehen sein können. Bei bevorzugten Ausführungsformen ist die Steuerungseinrichtung entfernt von der Kartusche angeordnet, insbesondere in einem von dem Gehäuse der Kartusche getrennten Gehäuse oder mindestens 10 cm oder mindestens 20 cm entfernt von der Kartusche. Dies bietet den Vorteil, dass die Steuerungseinrichtung an einem gut zugänglichen Ort oder an einem Ort, welcher ausreichend Platz oder Energieversorgung bietet, angeordnet sein kann. Typische Steuerungseinrichtungen können dazu eingerichtet sein, mit mehr als einer Kartusche kommunikativ verbunden zu werden. Auf diese Weise lässt sich die Konditionierung von Wasser von verschiedenen Stellen aus durch einen Benutzer vorgeben. Oder es ist auch möglich, verschiedene Kartuschen durch Programmierung verschiedenen Stellgliedern, Wasserabgabestellen oder Einrichtungen zur Konditionierung von Wasser zuzuordnen.

Typischerweise ist die Steuerungseinrichtung dazu eingerichtet, das mindestens eine Stellglied basierend auf einem Steuersignal des optischen Sensors zu kontrollieren. Unter "kontrollieren" ist hierin insbesondere steuern oder regeln zu verstehen. Bei typischen Ausführungsformen ist die Steuerungseinrichtung dazu eingerichtet, basierend auf dem Steuersignal des optischen Sensors eine Wasserabgabe freizugeben oder zu unterbrechen. Beispielsweise kann die Steuerungseinrichtung basierend auf einem Steuersignal des optischen Sensors, welches von dem optischen Sensor nach dem Erfassen einer Geste erzeugt wurde, eine Wasserabgabe freigeben. Basierend auf einer weiteren Geste und dem entsprechenden, von dem optischen Sensor erzeugten Steuersignal, kann die Wasserabgabe von der Steuerungseinrichtung beendet werden.

Bei typischen Ausführungsformen ist die Steuerungseinrichtung dazu eingerichtet, das mindestens eine Stellglied basierend auf einer Mehrzahl von Signalen zu kontrollieren, wobei die Mehrzahl von Signalen ein Steuersignal des optischen Sensors und mindestens ein weiteres, von einem weiteren Bedienelement des Wassersystems erzeugtes Signal umfasst. Die Mehrzahl von Signalen kann beispielsweise weiter ein Steuersignal der Gebereinrichtung umfassen. Insbesondere ist die Steuerungseinrichtung typischerweise dazu eingerichtet, das mindestens eine Stellglied in Abhängigkeit eines Steuersignals des optischen Sensors und eines Steuersignals der Gebereinrichtung zu kontrollieren. Beispielsweise kann die Steuerungseinrichtung Steuerdaten betreffend eine Temperatur, einen Volumenstrom oder einen Sprudelgrad eines abzugebenden Wassers oder eine Gesamtmenge eines in einem Abgabevorgang abzugebenden Wassers basierend auf einem Steuersignal der Gebereinrichtung erzeugen. Die Steuerungseinrichtung ist bei typischen Ausführungsformen dazu eingerichtet, Stellglieder derart anzusteuern, dass aus dem Wassersystem Wasser entsprechend der Steuerdaten abgegeben wird. Die Wasserabgabe gemäß den Steuerdaten kann beispielsweise basierend auf einem Steuersignal des optischen Sensors freigegeben oder beendet werden.

Bei typischen Wassersystemen ist die Steuerungseinrichtung programmierbar ausgeführt, so dass die Steuerungseinrichtung dazu eingerichtet ist, die Steuerdaten auch in Abhängigkeit einer Programmierung der Steuerungseinrichtung zu erzeugen. So kann die Steuerungseinrichtung beispielsweise eingerichtet sein, um durch Programmierung Signale verschiedener Sensoren zu verarbeiten, insbesondere Steuersignale des optischen Sensors oder der Gebereinrichtung. Zu einer Verarbeitung kann eine Koordinatentransformation, beispielsweise von dem x, y, z System in das alpha, phi System gehören. Auf diese Weise können die Signale eines Hallsensors verwendet werden, um in eine Hebelstellung umgerechnet zu werden. Bei weiteren Ausführungsformen ist der Wertgeber dazu eingerichtet, die Signale des Hallsensors (x, y, z) in ein anderes Koordinatensystem umzurechnen, so dass die Signale vor der Weiterleitung beispielsweise über die Kommunikationseinrichtung bereits als umgerechnete Signale vorliegen. Bei einer Weiterleitung der Signale, unabhängig davon, in welchem Koordinatensystem diese übermittelt werden, können durch Anpassung der Steuerungseinrichtung, bspw. durch Programmierung, mit einer Kartusche verschiedene Geräte oder Stellglieder bedient werden. Bei einer Integration der Steuerungseinrichtung mit der Kartusche kann die Kartusche durch die Steuerungseinrichtung dazu eingerichtet sein, direkt Steuerdaten zu erzeugen oder bei weiteren Ausführungsformen sogar eingerichtet sein, um Stellglieder direkt ansteuern. Dies bietet den Vorteil eines kompakten Aufbaus oder einer Stand-alone-Lösung insbesondere für kleinere Anwendungen, wobei jedoch durch Einbau jeweils einer Steuerungseinrichtung in jede Kartusche bei komplexeren Systemen höhere Kosten entstehen können.

Eine Möglichkeit einer Programmierung der Steuerungseinrichtung von Ausführungsformen ist, dass die Steuerungseinrichtung aus den Signalen Steuerdaten in Abhängigkeit der Programmierung erzeugt. Beispielsweise kann eine Programmierung eine maximale Temperatur für das Wasser, einen maximalen Sprudelgrad oder einen maximalen Volumenstrom bzw. eine Durchflussmenge - auch in Abhängigkeit einer Temperatur oder eines Sprudelgrades des Wassers, umfassen. Zwischen der Steuerungseinrichtung und dem Kommunikationsmodul der Kartusche kann die Kommunikation über einen Kommunikationsbus erfolgen.

Eine Programmierung der Steuerungseinrichtung kann die Belegung vorbestimmter oder programmierbarer Felder des beispielsweise als Hallsensor ausgeführten Wertgebers der Gebereinrichtung mit verschiedenen Funktionen sein, beispielsweise eine Belegung eines Feldes mit einer Temperatureingabe und eines anderen Feldes mit einer Sprudelgradeingabe. Eine Programmierung der Steuerungseinrichtung kann eine Anpassung der Erzeugung von Steuerdaten aus dem erhaltenen Signal der Gebereinrichtung in Abhängigkeit eines angeschlossenen Gerätes sein. Beispiele für vom angesteuerten Gerät oder Stellglied abhängigen Steuerdaten, die aus dem erhaltenen Signal der Gebereinrichtung erzeugt werden können, können sein:
Bei Einsatz eines Filters beispielsweise für Teewasser kann ungefiltertes Wasser zwischen Kalt und Warm mit einer Drehung der Hebelbefestigung bzw. des Hebels in einem Winkelbereich von mehr als 0°, beispielsweise zwischen 0° - 90°, um die Kartuschenachse eingestellt werden. Dies entspricht einer herkömmlichen Bedienung, wie sie von manchen Einhebelmischern bekannt ist. Bei einer Drehung der Hebelbefestigung unter 0°, beispielsweise zwischen -90° und 0°, werden Steuerdaten zur Zuschaltung des Filters ausgegeben, so dass gefiltertes Wasser abgegeben wird, ggf. auch mit einer Temperatur entsprechend des Winkels. Die Temperatur wird dabei über Stellglieder eingestellt, welche das Mischungsverhältnis von Kalt- und Warmwasser beeinflussen. Das gemischte Wasser kann dann bei Anwahl eines Winkelbereichs von kleiner 0° durch den Filter geleitet werden - wiederum mittels Steuerdaten, die ein Stellglied zum Zuschalten des Filters bewirken.

Bei Einsatz eines Boilers beispielsweise zur Abgabe von warmem, kaltem oder kochendem Wasser kann wiederum bis 90°, beispielsweise zwischen 0° - 90°, ein Bereich für Kalt-Warm-Verstellung vorgesehen sein - analog zu dem Anwendungsfall Filter. Steuerdaten zur Abgabe von kochendem Wasser mittels eines Stellglieds, welches eine Abgabe aus dem Boiler kontrolliert, können bei einer Stellung der Hebelbefestigung von mehr als 90°, beispielsweise bis 135°, ausgegeben werden. Vorzugsweise kann bei Kartuschen ein mechanischer Widerstand eine unbeabsichtigte Drehung über 90° begrenzen.

Bei Einsatz eines Kühlaggregats kann gekühltes Wasser beispielsweise bei einem Winkel von weniger als 0°, beispielsweise bei 0 - -90°, abgegeben werden, alternativ oder je nach Winkelstellung der Hebelbefestigung in Kombination mit gefiltertem Wasser. Bei einer Kombination mit einem Filter können beispielsweise von der Steuerungseinrichtung Steuerdaten für gefiltertes Wasser bei einer Winkelstellung der Hebelbefestigung von 0° bis -45° und Steuerdaten für gekühltes Wasser bei einer Winkelstellung der Hebelbefestigung von -45° bis -90° für die entsprechenden Stellglieder bereitgestellt werden.

Bei Einsatz eines Karbonisierers oder Sprudelgerätes kann mit CO₂ versetztes Wasser beispielsweise bei einer Winkellage der Hebelbefestigung um die Kartuschenachse von weniger als 0° abgegeben werden, indem die Steuerungseinrichtung bei einem Signal entsprechend einer Winkellage von weniger als 0° entsprechende Steuerdaten zum Ansteuern eines Stellglieds, in diesem Fall beispielsweise eines Ventils in einer CO₂-Zuführung, ausgibt. Weiterhin kann bei Ausführungsformen auch eine Kombination verschiedener Bereiche beispielsweise für gefiltertes Wasser, gekühltes Wasser oder karbonisiertes, d.h. mit CO₂ versetztes Wasser, vorgesehen sein. Die Bereiche für die Hebelbefestigung zum Ansteuern der genannten Funktionalitäten sind typischerweise jeweils durch Programmierung der Steuerungseinrichtung vorgegeben. So kann vorgesehen sein, dass ab 0° in 30°-Schritten die Bereiche für die Zuschaltung jeweils des Stellglieds für den Filter, das Kühlaggregat und die CO₂-Zuführung aufeinanderfolgen, 0° bis -30°, -30° bis -60 und -60° bis -90°, wobei die Reihenfolge bei weiteren Ausführungsformen auch anders ausgeführt sein kann, insbesondere frei durch einen Benutzer programmierbar sein kann.

Typische Kartuschen weisen bei Bereichsgrenzen, beispielsweise 0°, -30° und -60° oder -45° für die Winkellage der Hebelbefestigung um die Längsachse der Kartusche typischerweise mechanische Widerstände auf.

Bei Ausführungsformen weist die Steuerungseinrichtung, insbesondere ab Werk, gegebenenfalls auch Update-fähig, eine Vorprogrammierung auf, welche verschiedene Funktionen in Abhängigkeit von angeschlossenen Stellgliedern verschiedenen Winkelbereichen zuordnet. Auf diese Weise kann die Steuerungseinrichtung in Abhängigkeit der Fähigkeiten des aufgebauten Wassersystems verschiedene Winkelbereiche automatisch verschiedenen Funktionen zuordnen. Zusätzlich kann die Programmierung über ein Bedienmodul nach Wunsch eines Benutzers angepasst werden, wobei die Anpassung in einem Speicher der Steuerungseinrichtung gespeichert werden kann.

Bei typischen Ausführungsformen ist die Steuerungseinrichtung dazu eingerichtet, das mindestens eine Stellglied basierend auf einer vorbestimmten Abfolge bzw. Reihenfolge von Signalen zu kontrollieren. Eine oder mehrere vorbestimmte Abfolgen können in einem Speicher der Steuerungseinrichtung gespeichert sein. Typischerweise ist die Steuerungseinrichtung dazu eingerichtet, eine Abfolge einer Mehrzahl von Signalen, welche insbesondere ein Steuersignal des optischen Sensors umfasst, mit einer oder mehreren vorbestimmten Abfolgen von Signalen zu vergleichen. In Ausführungsformen umfasst die vorbestimmte Abfolge von Signalen beispielswiese ein oder mehrere Steuersignale von mindestens einem optischen Sensor oder ein oder mehrere Steuersignale von der Gebereinrichtung. Die Abfolge von Signalen kann beispielsweise eine Mehrzahl von Signalen von einer Mehrzahl von optischen Sensoren umfassen, insbesondere von einer Mehrzahl radial ausgerichteter oder in Umfangsrichtung verteilt angeordneter optischer Sensoren. Bei Ausführungsformen ist die Steuerungseinrichtung dazu eingerichtet, bei einer Übereinstimmung der Abfolge der Mehrzahl von Signalen mit der vorbestimmten Abfolge eine vorbestimmte Funktion auszuführen, insbesondere nur bei einer Übereinstimmung der Abfolge der Mehrzahl von Signalen mit der vorbestimmten Abfolge, beispielsweise zur Implementierung von Sicherheitsfunktionen.

Die Steuerungseinrichtung ist typischerweise dazu eingerichtet, eine Wasserabgabe bei einer Übereinstimmung der Abfolge der Mehrzahl von Signalen mit der vorbestimmten Abfolge freizugeben. Insbesondere kann die Steuerungseinrichtung dazu eingerichtet sein, vorbestimmte Wasserausgaben, beispielsweise die Ausgabe von kochendem Wasser, nur bei Übereinstimmung der Abfolge der Mehrzahl von Signalen mit der vorbestimmten Abfolge freizugeben. Eine Freigabe nur bei einer bestimmten Abfolge von Signalen kann eine Sicherheit des Wassersystems erhöhen. Unter anderem kann beispielsweise eine Kindersicherungsfunktion bereitgestellt werden, beispielsweise für die Ausgabe von kochendem Wasser. Bei Ausführungsformen kann die Kartusche eine Mehrzahl von optischen Sensoren aufweisen. Einer oder mehrere der optischen Sensoren können zum Überprüfen einer Abfolge von Signalen gezielt in zeitlicher Abfolge von einer Steuerungseinrichtung oder einer Signalverarbeitungseinrichtung aktiviert oder deaktiviert werden. Eine Ausgabe von Wasser kann beispielsweise erfolgen, wenn durch jeweilige Gesten die aktivierten optischen Sensoren ausgelöst werden.

Typische Kartuschen oder Wassersysteme können ein Bedienmodul aufweisen, welches dazu eingerichtet ist, in Abhängigkeit der Steuersignale der Gebereinrichtung oder des optischen Sensors eine Anzeige auszugeben. Bei Wassersystemen kann vorgesehen sein, dass die Anzeige in Abhängigkeit einer Programmierung der Steuerungseinrichtung ausgegeben wird. Beispielsweise kann integral mit der Kartusche eine optische Funktionsanzeige vorgesehen sein, z.B. ausgeführt als LED-Funktionsanzeige. Bei Ausführungsformen kann die Funktionsanzeige eingerichtet sein, allgemein die bei der aktuellen Position der Hebelbefestigung beeinflusste Funktion anzeigen. Funktionen können beispielsweise die Temperaturvorgabe für das Wasser oder eine Sprudelgradvorgabe für das Wasser sein. Das Bedienmodul kann in einem Gehäuse der Kartusche integriert sein oder als externes, bspw. über Bluetooth angebundenes Gerät, ausgeführt sein. Es können auch eine Mehrzahl von Bedienmodulen, von denen eines in dem Gehäuse der Kartusche integriert sein kann, vorgesehen sein.

Typische Verfahren zum Steuern eines Wassersystems umfassen ein Erfassen einer Geste in dem Außenbereich der Kartusche unter Verwendung des optischen Sensors der Kartusche. Typischerweise wird basierend auf der erfassten Geste ein der Geste entsprechendes Steuersignal erzeugt. Beispielsweise kann ein Steuersignal erzeugt werden, wenn die Geste in einem vorbestimmten Abstandsbereich des überwachten Außenbereichs erfasst wird. Typische Verfahren umfassen ein Übermitteln des Steuersignals des optischen Sensors an eine Steuerungseinrichtung des Wassersystems, beispielsweise durch ein Kommunikationsmodul der Kartusche gemäß hierin beschriebenen Ausführungsformen. Typischerweise umfasst das Verfahren ein Ansteuern des mindestens einen Stellglieds durch die Steuerungseinrichtung in Abhängigkeit des Steuersignals. Das Ansteuern kann insbesondere ein Freigeben oder Beenden einer Wasserausgabe umfassen.

Typische Verfahren umfassen ein Übermitteln eines Gebersignals in Abhängigkeit der Position der Hebelbefestigung an die Steuerungseinrichtung, insbesondere vor einem Ansteuern des mindestens einen Stellglieds. Typischerweise umfasst das Ansteuern des mindestens einen Stellglieds zur Abgabe von Wasser ein Ermitteln einer Menge des abzugebenden Wassers oder einer Wassertemperatur des abzugebenden Wassers basierend auf dem Gebersignal. Eine Menge des abzugebenden Wassers kann beispielsweise aus dem Kippwinkel der Hebelbefestigung ermittelt werden. Eine Temperatur des abzugebenden Wassers kann beispielsweise aus dem Drehwinkel der Hebelbefestigung um die Kartuschenachse ermittelt werden. Typischerweise umfasst das Ansteuern des mindestens einen Stellglieds ein Freigeben der Abgabe des Wassers basierend auf dem Steuersignal des optischen Sensors, wobei das Wasser in der ermittelten Menge oder mit der ermittelten Temperatur abgegeben wird. Bei typischen Ausführungsformen kann die Abgabe des Wassers nach Durchfluss der ermittelten Menge an Wasser von der Steuerungseinrichtung beendet werden. Bei weiteren typischen Ausführungsformen kann das Beenden der Wasserabgabe auf ein weiteres Steuersignal des optischen Sensors hin erfolgen, insbesondere nach Erfassen einer weiteren Geste durch den optischen Sensor.

Typische Verfahren umfassen ein Übermitteln mindestens eines weiteren Signals von mindestens einem weiteren Bedienelement des Wassersystems an die Steuerungseinrichtung. Typischerweise umfasst das Ansteuern des zumindest einen Stellglieds ein Freigeben einer Wasserabgabe in Abhängigkeit einer zeitlichen Abfolge des Steuersignals und des mindestens einen weiteren Signals.

Vorteile der Erfindung können sein, dass zusätzliche Funktionen für einen Einhebelmischer bereitgestellt werden können. Eine berührungslose Betätigung einer Armatur eines Wassersystems unter Verwendung einer erfindungsgemäßen Kartusche kann beispielsweise eine vereinfachte, schnellere oder hygienischere Benutzung des Einhebelmischers bereitstellen. Zum Beispiel kann ein Einhebelmischer zur Ausgabe von Wasser mit einer gewissen Temperatur oder einem gewissen Wasserfluss über den Hebel einmal für eine Mehrzahl an Wasserausgaben eingestellt werden, wobei die Wasserabgabe berührungslos freigegeben oder beendet werden kann. Eine Programmierbarkeit der Steuerungseinrichtung kann ein Anpassen der Funktionen bereitstellen. Zum Beispiel kann per Software oder durch Programmierung der Steuerungseinrichtung eingestellt werden, ab welcher Hebelstellung der optische Sensor ein Freigabesignal für eine definierte Wassermenge gibt. Einstellmöglichkeiten von Funktionen des Wassersystems durch Programmierung können zur Bereitstellung zusätzlicher Sicherheitsfunktionen in der Bedienung genutzt werden, insbesondere zur Kindersicherung. Die Verwendung eines optischen Sensors in einer Kartusche mit einer hierin beschriebenen Gebereinrichtung kann vorteilhafterweise mit lediglich einer Platine oder mit wenig zusätzlicher Elektronik erfolgen.

### Kurze Beschreibung der Zeichnungen

Nachfolgend wird die vorliegende Erfindung anhand der beiliegenden Zeichnungen näher erläutert, wobei die Figuren zeigen:
- Fig. 1: eine schematische Ansicht einer Kartusche gemäß einer typischen Ausführungsform;
- Fig. 2: eine schematische Schnittansicht einer Kartusche;
- Fig. 3: eine Hebelbefestigung der Kartusche mit Drehachsen;
- Fig. 4: eine schematische Schnittansicht einer Kartusche in einem Armaturgehäuse;
- Fig. 5: ein Wassersystem zur Abgabe von konditionierbarem Wasser mit einer Kartusche in einer beispielhaften Ausführungsform; und
- Fig. 6: ein schematisches Flussdiagramm eines typischen Verfahrens.

### Beschreibung von Ausführungsbeispielen

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsform werden unter Umständen in verschiedenen Figuren und für verschiedene Ausführungsformen gleiche Bezugszeichen für gleiche oder ähnliche Teile verwendet, um die Beschreibung übersichtlicher zu gestalten. Dies bedeutet jedoch nicht, dass entsprechende Teile der Erfindung auf die in den Ausführungsformen dargestellten Varianten beschränkt sind.

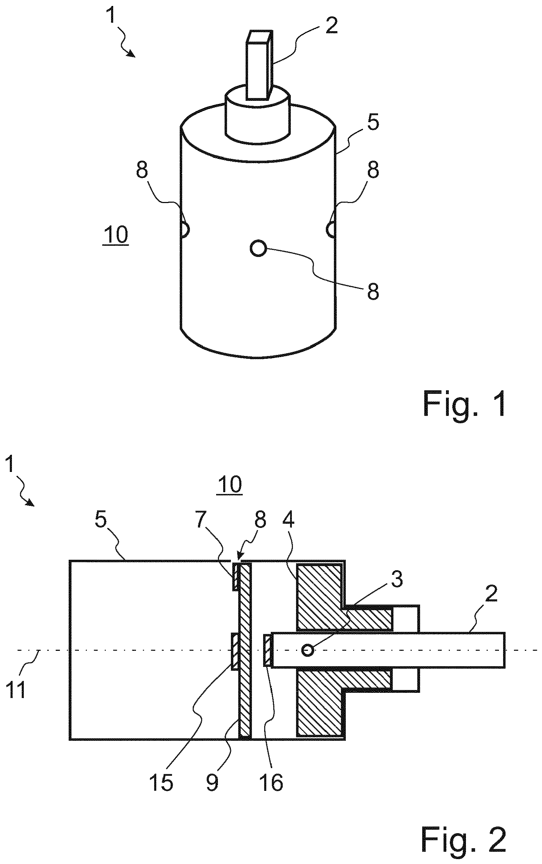

Fig. 1 zeigt ein Ausführungsbeispiel einer Kartusche 1. Die Kartusche 1 weist ein zylinderförmiges Gehäuse 5 auf. In einem axialen Endbereich der Kartusche 1 ist eine Hebelbefestigung 2 angeordnet, an der ein nicht dargestellter Hebel einer Einhebelarmatur befestigbar ist. Die Hebelbefestigung 2 ist in dem Gehäuse 5 um zwei Achsen beweglich gelagert. Das Gehäuse 5 der Kartusche 1 weist eine Mehrzahl an Sensoröffnungen 8 auf, welche in Umfangsrichtung um die Kartusche 1 angeordnet sind.

In dem Gehäuse 5 der Kartusche 1 ist hinter den Sensoröffnungen 8 jeweils ein in der Fig. 1 nicht dargestellter, optischer Sensor angeordnet. Die optischen Sensoren sind in der Kartusche 1 jeweils zur Überwachung eines Außenbereichs 10 außerhalb der Kartusche 1 ausgerichtet. Insbesondere sind die optischen Sensoren radial ausgerichtet.

Die optischen Sensoren sind dazu eingerichtet, Gesten in dem Außenbereich 10 zu erfassen und basierend auf einer erfassten Geste ein Steuersignal für ein Wassersystem zu erzeugen.

Fig. 2 zeigt eine Schnittansicht einer Kartusche 1 gemäß einer Ausführungsform. Das Gehäuse 5 der Kartusche 1 weist eine Sensoröffnung 8 für einen radial bezüglich der Kartuschenachse 11 ausgerichteten, optischen Sensor 7 auf. Der optische Sensor 7 ist auf einer drehfest mit dem Gehäuse 5 verbundenen Platine 9 der Kartusche 1 angeordnet. Die Hebelbefestigung 2 umfasst einen Befestigungsarm, welcher über ein Kipplager 3 kippbar an einem Lagerring 4 gelagert ist. Der Lagerring 4 ist um die Kartuschenachse 11 drehbar an dem Gehäuse 5 gelagert.

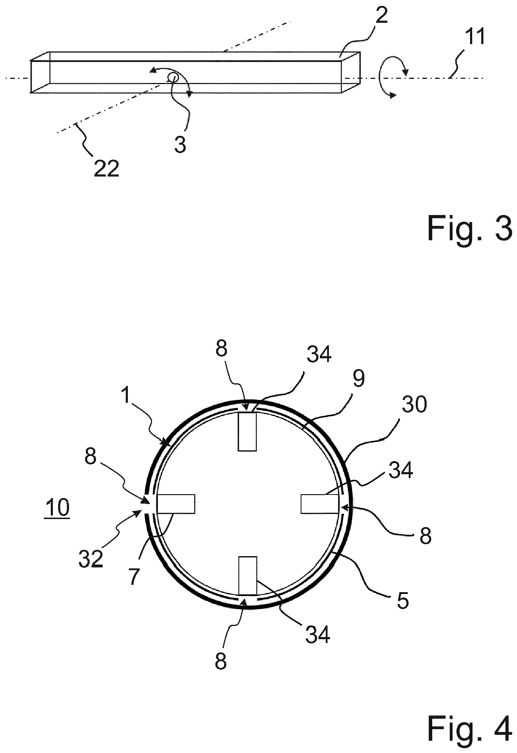

Fig. 3 zeigt die Hebelbefestigung 2 mit dem Kipplager 3 in einer Detailansicht, in welcher die Hebelbefestigung 2 parallel bzw. unverkippt zur Kartuschenachse 11 dargestellt ist. Die eingezeichneten Pfeile verdeutlichen eine Rotationsbewegung der Hebelbefestigung 2 um die Kartuschenachse 11, wenn der nicht dargestellte Hebel einer Einhebelarmatur gedreht wird, und eine Kippbewegung der Hebelbefestigung 2 am Kipplager 3 um die Kippachse 22, wenn der nicht dargestellte Hebel einer Einhebelarmatur angehoben oder abgesenkt wird.

Wie in Fig. 2 dargestellt, weist die Kartusche 1 eine Gebereinrichtung mit einem Wertgeber 15 und einem Positionsgeber 16 auf. Insbesondere ist der Wertgeber 15 als mehrachsiger Hallsensor ausgeführt und auf einer Platine 9 angeordnet. Der Positionsgeber 16 ist an dem inneren Ende der Hebelbefestigung 2 angeordnet und starr mit der Hebelbefestigung 2 verbunden, so dass der Permanentmagnet den Bewegungen der Hebelbefestigung 2 folgt. Der Wertgeber 15 ist dazu eingerichtet, eine Position der Hebelbefestigung 2 aufgrund der Position oder Ausrichtung des Positionsgebers 16 zu ermitteln und ein entsprechendes Signal für ein Wassersystem zu erzeugen.

Fig. 4 zeigt einen Querschnitt einer Kartusche 1, welche in einem Armaturgehäuse 30 angeordnet ist. Ähnlich wie in Fig. 1 weist die Kartusche 1 der Fig. 4 vier optische Sensoren auf, insbesondere den optischen Sensor 7 und weitere optische Sensoren 34.

Die optischen Sensoren sind auf einer Platine 9 der Kartusche 1 angeordnet. Die optischen Sensoren sind jeweils radial und in einer Linie mit einer Sensoröffnung 8 des Gehäuses 5 der Kartusche 1 ausgerichtet. In Fig. 4 weist das Armaturgehäuse 30 genau eine Armaturenöffnung 32 für genau einen optischen Sensor 7 auf. Die weiteren optischen Sensoren 34 und Sensoröffnungen 8 sind durch das Armaturgehäuse 30 verdeckt. Die weiteren optischen Sensoren 34 können über eine Steuerungseinrichtung des Wassersystems oder eine Signalverarbeitungseinrichtung der Kartusche 1 deaktiviert werden. Die Armaturenöffnung 32 ist durch ein in der Fig. 4 nicht dargestelltes Fenster abgedeckt, insbesondere um ein Eindringen von Wasser in das Armaturgehäuse 30 oder in die Kartusche 1 zu verhindern.

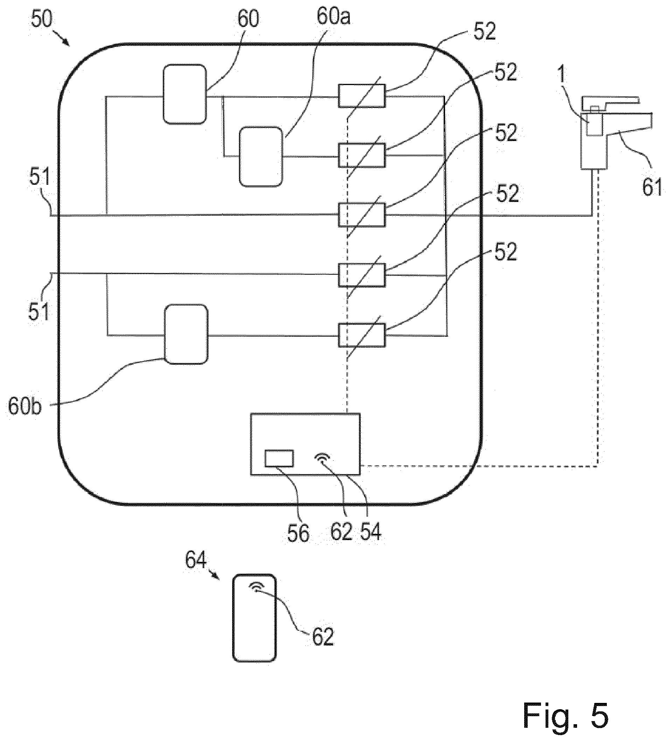

Fig. 5 zeigt ein Wassersystem 50 zur Abgabe von konditionierbarem Wasser mit einer Kartusche 1, beispielsweise einer Kartusche 1 gemäß Fig. 2, ergänzt um ein Kommunikationsmodul und eine Energieversorgungseinrichtung.

Das Wassersystem 50 weist Anschlüsse 51 für Warmwasser und Kaltwasser auf. Weiterhin umfasst das Wassersystem 50 Stellglieder 52 zum Steuern der Bereitstellung von Wasser und eine Steuerungseinrichtung 54 zum Kontrollieren der Stellglieder 52. Die Steuerungseinrichtung 54 ist dazu eingerichtet, von dem Kommunikationsmodul der Kartusche 1 ein Signal des Wertgebers zu empfangen und in Abhängigkeit dieses Signals Steuerdaten betreffend die Temperatur, den Volumenstrom und, falls gewünscht, den Sprudelgrad des abzugebenden Wassers zu erzeugen. Die Stellglieder 52 umfassen verschiedene Ventile, um beispielsweise den Durchfluss von kochendem Wasser aus dem Behälter 60b, von gekühltem Wasser aus dem Behälter 60, von mit CO₂ versetztem Wasser aus dem Behälter 60a, Kaltwasser und Warmwasser durch eine Ausgabevorrichtung 61 zu kontrollieren. Die Steuerungseinrichtung 54 ist dazu eingerichtet, den Durchfluss von Wasser durch die Ausgabevorrichtung 61 in Abhängigkeit eines Steuersignals des optischen Sensors zu kontrollieren, insbesondere auf eine von dem optischen Sensor erfasste Geste und ein entsprechendes Steuersignal hin den Durchfluss freizugeben oder zu beenden.

Die Steuerungseinrichtung 54 umfasst einen Speicher 56 und ist außerdem über eine kabellose oder kabelbehaftete Datenverbindung, insbesondere eine Bluetooth- oder WLAN-Verbindung, an ein Datennetz 62 angeschlossen, so dass die Steuerungseinrichtung 54 programmierbar ist. Kabelgebunden oder mit Bluetooth kann eine Datenverbindung für die Signale von der Kartusche zu der Steuerungseinrichtung 54, und ggf. auch in umgekehrter Richtung, aufgebaut sein.

Bei Ausführungsformen der Kartusche mit Hallsensor können beispielsweise verschiedene Felder oder Wertebereiche für die Signale des Hallsensors in der Steuerungseinrichtung 54 hinterlegt bzw. programmiert werden, um eine Abgabe verschiedener Arten von Wasser zu ermöglichen.

Weiterhin umfasst die Kartusche 1 bei dem Ausführungsbeispiel der Fig. 5 ein Bedienmodul 64, welches dazu eingerichtet ist, in Abhängigkeit des Signals des Wertgebers und in Abhängigkeit einer Programmierung der Steuerungseinrichtung 54 optisch eine Rückmeldung an einen Benutzer des Wassersystems 50 auszugeben. Das Bedienmodul 64 umfasst hierzu eine mit LED-Leuchtmittel ausgestattete Funktionsanzeige, welche beispielsweise die durch die Kartusche eingestellte Temperaturvorgabe oder Sprudelgradvorgabe für das Wasser anzeigen kann.

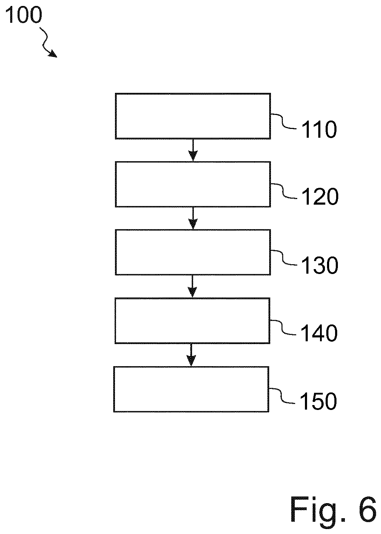

Fig. 6 zeigt ein schematisches Flussdiagramm eines typischen Verfahrens 100 zum Steuern eines Wassersystems, beispielsweise des in Fig. 5 dargestellten Wassersystems 50. Bei Block 110 umfasst das Verfahren 100 ein Bestimmen einer Position der Hebelbefestigung 2 unter Verwendung der Gebereinrichtung und ein Erzeugen eines Gebersignals durch die Gebereinrichtung basierend auf der Position. Bei Block 120 wird das Gebersignals von der Gebereinrichtung an die Steuerungseinrichtung 54 übermittelt. Bei Block 130 erfolgt ein Erfassen einer Geste in dem Außenbereich 10 außerhalb der Kartusche 1 unter Verwendung des optischen Sensors 7 der Kartusche 1 und ein Erzeugen eines der Geste entsprechenden Steuersignals. Bei Block 140 wird das Steuersignal an die Steuerungseinrichtung 54 übermittelt. Bei Block 150 umfasst das Verfahren 100 ein Ansteuern der Stellglieder 52. Das Ansteuern umfasst ein Ermitteln von Eigenschaften des abzugebenden Wassers, insbesondere einer Menge, einer Wassertemperatur und eines Sprudelgrads des abzugebenden Wassers. Basierend auf den ermittelten Eigenschaften können bei Ausführungsformen die Einstellungen für die Stellglieder 52 zur entsprechenden Abgabe von Wasser bestimmt werden. Typischerweise umfasst das Ansteuern der Stellglieder 52 ein Freigeben der Abgabe des Wassers mit den ermittelten Eigenschaften basierend auf dem von der Steuerungseinrichtung 54 empfangenen Steuersignal des optischen Sensors 7. Das Freigeben der Wasserausgabe umfasst das Einstellen der Stellglieder 52 gemäß den zuvor bestimmten Einstellungen, so dass eine Ausgabe von Wasser mit den ermittelten Eigenschaften durch die Ausgabevorrichtung 61 erfolgt.

Die Erfindung ist nicht auf zuvor beschriebenen Ausführungsformen beschränkt, vielmehr wird der Umfang der Erfindung durch die beigefügten Ansprüche bestimmt.

### Bezugszeichenliste

1 Kartusche
2 Hebelbefestigung
3 Kipplager
4 Lagerring
5 Gehäuse
7 optischer Sensor
8 Sensoröffnung
9 Platine
10 Außenbereich
11 Kartuschenachse
15 Wertgeber
16 Positionsgeber
22 Kippachse
30 Armaturgehäuse
32 Armaturenöffnung
34 weitere optische Sensoren
50 Wassersystem
51 Anschlüsse für Warmwasser und für Kaltwasser
52 Stellglieder
54 Steuerungseinrichtung
56 Speicher
60 Behälter, gekühltes Wasser
60a Behälter, mit CO₂ versetztes Wasser
60b Behälter, kochendes Wasser
61 Ausgabevorrichtung
62 Datennetz
64 Bedienmodul

## Patentansprüche

1. Kartusche (1) zur Generierung von Steuersignalen für ein Wasserausgabesystem, umfassend:
- ein Gehäuse (5),
- eine relativ zu dem Gehäuse (5) bewegliche Hebelbefestigung (2) zur Aufnahme eines Hebels, und
- einen optischen Sensor (7) zur optischen Überwachung eines Außenbereichs (10) außerhalb der Kartusche (1).

2. Kartusche (1) nach Anspruch 1, weiter umfassend eine Gebereinrichtung zur Erzeugung eines Signals in Abhängigkeit der Position der Hebelbefestigung (2).

3. Kartusche (1) nach einem der Ansprüche 1 oder 2, wobei der optische Sensor (7) dazu eingerichtet ist, eine Geste in dem Außenbereich (10) zu erfassen und basierend auf der erfassten Geste ein Steuersignal für das Wasserausgabesystem auszugeben.

4. Kartusche (1) nach einem der vorhergehenden Ansprüche, wobei das Gehäuse (5) der Kartusche (1) zwischen dem optischen Sensor (7) und dem Außenbereich (10) eine Sensoröffnung (8) aufweist.

5. Kartusche (1) nach einem der vorhergehenden Ansprüche, wobei der optische Sensor (7) zur Überwachung eines in axialer Richtung an die Kartusche (1) angrenzenden Bereichs des Außenbereichs (10) ausgerichtet ist.

6. Kartusche (1) nach einem der Ansprüche 1 bis 4, wobei der optische Sensor (7) zur Überwachung eines Bereichs radial außerhalb der Kartusche (1) ausgerichtet ist.

7. Kartusche (1) nach einem der vorhergehenden Ansprüche, wobei der optische Sensor (7) einen Infrarot-Sensor und/oder einen Time-of-Flight-Sensor umfasst.

8. Einhebelmischer für ein Wasserabgabesystem, umfassend
- eine Armatur mit einem Armaturgehäuse (30), und
- eine Kartusche (1) gemäß einem der vorhergehenden Ansprüche, wobei die Kartusche (1) zur Anordnung in dem Armaturgehäuse (30) eingerichtet ist.

9. Wassersystem (50) zur Abgabe von Wasser, insbesondere konditionierbares Wassersystem, entweder mit einer Kartusche (1) nach einem der Ansprüche 1 bis 7 oder mit einem Einhebelmischer nach Anspruch 8, mindestens einem Stellglied (52) zum Steuern der Bereitstellung von Wasser und einer Steuerungseinrichtung (54) zum Kontrollieren des mindestens einen Stellglieds (52).

10. Wassersystem (50) nach Anspruch 9, wobei die Steuerungseinrichtung (54) dazu eingerichtet ist, das mindestens eine Stellglied (52) basierend auf einem Steuersignal des optischen Sensors (7) zu kontrollieren.

11. Wassersystem (50) nach Anspruch 10, wobei die Steuerungseinrichtung (54) dazu eingerichtet ist, basierend auf dem Steuersignal des optischen Sensors (7) eine Wasserabgabe freizugeben oder zu unterbrechen.

12. Wassersystem (50) nach einem der Ansprüche 9 bis 11, wobei die Steuerungseinrichtung (54) dazu eingerichtet ist, das mindestens eine Stellglied (52) basierend auf einer Mehrzahl von Signalen zu kontrollieren, wobei die Mehrzahl von Signalen ein Steuersignal des optischen Sensors (7) und mindestens ein weiteres, von einem weiteren Bedienelement des Wassersystems (50) erzeugtes Signal umfasst.

13. Wassersystem (50) nach einem Anspruch 12, wobei die Steuerungseinrichtung (54) dazu eingerichtet ist, das mindestens eine Stellglied (52) weiter basierend auf einer vorbestimmten Abfolge von Signalen zu kontrollieren, wobei die Steuerungseinrichtung (54) eine Wasserabgabe bei einer Übereinstimmung der Abfolge der Mehrzahl von Signalen mit der vorbestimmten Abfolge freigibt.

14. Verfahren zum Steuern eines Wassersystems (50) nach einem der Ansprüche 9 bis 13, umfassend:
- Erfassen einer Geste in dem Außenbereich (10) der Kartusche (1) unter Verwendung des optischen Sensors (7) der Kartusche (1) und Erzeugen eines der Geste entsprechenden Steuersignals,
- Übermitteln des Steuersignals an die Steuerungseinrichtung (54); und
- Ansteuern des mindestens einen Stellglieds (52) durch die Steuerungseinrichtung (54) in Abhängigkeit von dem Steuersignal.

15. Verfahren nach Anspruch 14, weiter umfassend
- Übermitteln eines Gebersignals in Abhängigkeit der Position der Hebelbefestigung (2) an die Steuerungseinrichtung (54);
wobei das mindestens eine Stellglied (52) zur Abgabe von Wasser angesteuert wird, und wobei das Ansteuern des mindestens einen Stellglieds umfasst:
- Ermitteln einer Menge des abzugebenden Wassers und/oder einer Wassertemperatur des abzugebenden Wassers basierend auf dem Gebersignal, und
- Freigeben der Abgabe des Wassers basierend auf dem Steuersignal des optischen Sensors (7), wobei das Wasser in der ermittelten Menge und/oder mit der ermittelten Temperatur abgegeben wird;
und/oder
- Übermitteln mindestens eines weiteren Signals von mindestens einem weiteren Bedienelement des Wassersystems (50) an die Steuerungseinrichtung (54);
wobei das Ansteuern des zumindest einen Stellglieds (52) ein Freigeben einer Wasserabgabe in Abhängigkeit einer zeitlichen Abfolge des Steuersignals und des mindestens einen weiteren Signals umfasst.
